# EUROPÄISCHE PATENTSCHRIFT

(11) **EP 2 261 501 B1**
(45) Veröffentlichungstag und Bekanntmachung des Hinweises auf die Patenterteilung: **07.05.2014**
(21) Anmeldenummer: 10005443.6
(22) Anmeldetag: 26.05.2010
(51) Int. Cl.: B29D 99/00, B29C 65/48, B29C 65/00, F03D 1/06, B29L 31/08

(54) **Verfahren und Vorrichtung zur Montage eines Rotorblatts für eine Windenergieanlage**
Method and device for mounting a rotor blade for a wind energy plant
Méthode et dispositif de montage d'une pale de rotor pour une éolienne

(30) Priorität: 29.05.2009 DE 102009024324
(43) Veröffentlichungstag der Anmeldung: 15.12.2010
(73) Patentinhaber: Nordex Energy GmbH, 22848 Norderstedt (DE)
(72) Erfinder: Gau, Lutz-Reiner, 14478 Potsdam (DE)
(74) Vertreter: Hauck Patent- und Rechtsanwälte

(56) Entgegenhaltungen:
- EP-A1- 1 695 813
- EP-A2- 0 037 987
- DE-A1-102004 057 979
- DE-A1-102008 012 777
- US-A1- 2005 214 122

## Beschreibung

Die Erfindung betrifft ein Verfahren und eine Vorrichtung zur Montage eines Rotorblatts für eine Windenergieanlage, das eine erste Halbschale, eine zweite Halbschale und mindestens einen in Längsrichtung des Rotorblatts verlaufenden Steg aufweist (siehe z.B. DE 102004057979 A).

Rotorblätter von Windenergieanlagen sind sehr hohen und wechselnden Belastungen ausgesetzt. Die Festigkeit und aerodynamische Qualität der Rotorblätter hängt insbesondere bei Rotorblättern, die aus zwei Halbschalen zusammengefügt werden, wesentlich von der exakten und sicheren Montage der genannten Komponenten ab. Ober- und Unterschale derartiger Rotorblätter bestehen zumeist aus glasfaserverstärktem Kunststoff und werden unter anderem an ihren Vorder- und Hinterkanten umlaufend miteinander verklebt. Zwischen Ober- und Unterschale befindet sich häufig ein Steg oder auch mehrere insbesondere parallel angeordnete Stege, die mit der Unterschale und der Oberschale verbunden sind und dem Rotorblatt zusätzliche Festigkeit verleihen. Der oder die Stege bilden in Verbindung mit den längs der Schalenhälften verlaufenden Hauptgurten eine Trageinheit.

Bei einem bekannten Montageverfahren wird zunächst die Unterschale des Rotorblatts in einer nach oben offenen Form oder auf einem geeigneten Gestell angeordnet, so dass ihre Innenseite nach oben weist. Im Verbindungsbereich zwischen der Unterschale und dem Steg bzw. den Stegen wird Klebstoff auf die Unterschale aufgetragen. Anschließend wird der Steg bzw. werden die Stege mit einem geeigneten Hebezeug an der gewünschten Position auf die Unterschale abgesenkt, bis sie auf der Unterschale aufliegen. Anschließend wird Klebstoff im Verbindungsbereich zwischen den Schalenhälften und im Verbindungsbereich zwischen dem Steg bzw. den Stegen und der Oberschale aufgetragen und die Oberschale wird auf den Steg bzw. die Stege und die Unterschale aufgesetzt und mit diesen verklebt.

Davon ausgehend ist es die Aufgabe der Erfindung, ein verbessertes Verfahren zur Montage eines Rotorblatts für eine Windenergieanlage zur Verfügung zu stellen, das eine gleichmäßige und vorgabegerechte Dimensionierung der Klebeverbindungen von Steg oder Stegen mit den in die Hauptschale integrierten Hauptgurten bei gleichzeitig geringerem Klebstoffverbrauch ermöglicht, sowie eine Vorrichtung zur Durchführung des Verfahrens.

Die Erfindung beruht auf der Erkenntnis, dass das aus dem Stand der Technik bekannte Absetzen des Steges auf der Unterschale häufig zu einer ungenauen Positionierung des Stegs führt. Ursache hierfür sind maßliche Abweichungen in der Innenkontur der Unterschale. Die Halbschalen der Rotorblätter werden in der Regel in offenen Formen entweder durch Einlegen von bereits mit Harz getränkten Glasgelegen, sogenannten Prepregs, oder durch einen trockenen Lagenaufbau aus Glasgelegen mit anschließender Infusion oder Injektion eines Harzes gefertigt. Der Lagenaufbau wird mit einer Folie luftdicht abgedeckt und die Luft wird evakuiert. Der nun gegenüber dem Innendruck unter der Folie größere atmosphärische Luftdruck presst die Gelege-Lagen zusammen und gewährleistet so eine hohe Dichte des entstehenden Laminats. Bedingt durch von Fall zu Fall unterschiedliche Druck-und Temperaturverhältnisse, Falten und Wellen in den Gelegen, je nach Temperatur und chemischer Zusammensetzung der Harze differierende Viskositäten und Benetzungsverhalten der Glasfasern entstehen in Form von Falten, Wellen und Beulen Unregelmäßigkeiten der Innenkonturen der Halbschalen. Unter Falten sind dabei Erhöhungen in Längsrichtung der Halbschale zu verstehen. Wellenartige Erhöhungen erstrecken sich in Querrichtung der Halbschalen.

Bei dem aus dem Stand der Technik bekannten Montageverfahren sinkt der Steg abhängig von der Viskosität des Klebstoffs unter seinem Eigengewicht unterschiedlich tief in den aufgetragenen Klebstoff ein. Bei relativ flüssigem Klebstoff sinkt der Steg in der Regel bis auf die Innenkontur des Rotorblatts durch. Die häufig in der Innenkontur auftretenden Unregelmäßigkeiten in Form von Wellen oder Falten im Laminat führen zu einem punktuellen Aufliegen des Steges. Unregelmäßigkeiten, deren Höhe über das zulässige Spaltmaß hinausgeht, wirken sich insbesondere negativ auf die vertikale Position des Steges aus. Der Steg kann außerdem in Längs- und/oder Querrichtung verkippen, was zu Fehlern bei der Positionierung des Steges und in der Folge zu großen Abweichungen in der Dicke und Geometrie der Klebefuge führt. Bei größeren Unregelmäßigkeiten der Innenkontur der Halbschale kann es auch dazu kommen, dass der Steg stellenweise keinen ausreichenden Kontakt mit dem aufgetragenen Klebstoff erhält und der verbleibende Freiraum zwischen Steg und Halbschale nicht ausreichend mit Klebstoff gefüllt ist. Im Extremfall kann durch hochstehende Stegbereiche das Aufsetzen und Verkleben der Oberschale mit der Unterschale und dem Steg oder den Stegen unmöglich werden. Die Stege müssen dann mittig in Längsrichtung eingeschnitten werden, um ihr Höhe zu reduzieren.

Abweichungen bei der Positionierung des Stegs auf der Unterschale können bei der Verbindung mit der Oberschale zu erheblichen Ungenauigkeiten führen. Die genannten Probleme erfordern eine aufwendige Nachbearbeitung der Klebverbindungen des jeweiligen Rotorblatts, was nach dem Aufsetzen der Oberschale unter Umständen nicht mehr möglich ist. Insbesondere in den flacheren Rotorblattbereichen nahe der Blattspitze ist die Kontrolle oder Nachbearbeitung der Klebeverbindungen nach der Verklebung des Blattes nur noch eingeschränkt möglich.

Die oben angegebene Aufgabe wird gelöst durch das Verfahren mit den Merkmalen des Anspruchs 1. Vorteilhafte Ausgestaltungen sind in den sich anschließenden Unteransprüchen angegeben.

Das Verfahren zur Montage eines Rotorblatts für eine Windenergieanlage, das eine erste Halbschale, eine zweite Halbschale und mindestens einen in Längsrichtung des Rotorblatts verlaufenden Steg aufweist, hat die folgenden Schritte:
- Anordnen der ersten Halbschale in einer vorgegebenen Position,
- Befestigen des mindestens einen Stegs an einer Steghaltevorrichtung,
- Anordnen von Klebstoff im Verbindungsbereich zwischen der ersten Halbschale und dem mindestens einen Steg,
- Bewegen der Steghaltevorrichtung mit dem daran befestigten, mindestens einen Steg in Richtung zu der ersten Halbschale hin bis zu einer Endposition, in der der Klebstoff aushärtet und den mindestens einen Steg und die erste Halbschale miteinander verbindet, wobei mindestens eine die Bewegung zu der ersten Halbschale hin begrenzende Bewegungsbegrenzungseinrichtung die Endposition so vorgibt, dass der mindestens eine Steg entlang seiner gesamten Länge in einem Abstand von der ersten Halbschale schwebend angeordnet ist,
- Lösen und Entfernen der Steghaltevorrichtung von dem mindestens einen Steg,
- Anordnen von Klebstoff im Verbindungsbereich zwischen der zweiten Halbschale und dem mindestens einen Steg,
- Anordnen der zweiten Halbschale in einer vorgegebenen Position und Verbinden der ersten Halbschale mit der zweiten Halbschale.

Die erste Halbschale kann die Unterschale und die zweite Halbschale kann die Oberschale des Rotorblatts sein, oder umgekehrt. Das Anordnen der ersten Halbschale kann beispielsweise mit Hilfe einer zur Herstellung der Halbschale verwendeten Form oder sonstigen Trage- oder Haltevorrichtung, im Folgenden als Aufnahmeeinrichtung bezeichnet, erfolgen, die die erste Halbschale in einer vorgegebenen Position aufnimmt und in dieser hält. Insbesondere kann die erste Halbschale so angeordnet werden, dass ihre Innenseite nach oben weist.

Das Befestigen des mindestens einen Stegs an der Steghaltevorrichtung kann insbesondere mit Hilfe einer geeigneten Befestigungseinrichtung der Steghaltevorrichtung erfolgen, mit der der mindestens eine Steg lösbar in der Steghaltevorrichtung befestigbar ist. Die Befestigung kann so erfolgen, dass der mindestens eine Steg bezüglich der Steghaltevorrichtung in einer vorgegebenen Position und Winkellage fixiert ist.

Der Klebstoff wird im Verbindungsbereich zwischen der ersten Halbschale und dem mindestens einen Steg angeordnet. Er kann beispielsweise auf die Innenseite der ersten Halbschale aufgetragen werden.

Der Klebstoff im Verbindungsbereich zwischen der zweiten Halbschale und dem mindestens einen Steg kann beispielsweise auf der der zweiten Halbschale zugewandten Fläche des mindestens einen Stegs oder auf die Innenseite der zweiten Halbschale aufgetragen werden.

Das Anordnen der zweiten Halbschale in einer vorgegebenen Position kann beispielsweise mit Hilfe eines Krans erfolgen; denkbar ist auch die Verwendung einer gesonderten Vorrichtung, mit der die zweite Halbschale in die vorgegebene Position gebracht wird, beispielsweise durch Schwenken der zweiten Halbschale um eine parallel zu ihrer Längsrichtung verlaufenden Schwenkachse. Um die zweite Halbschale in ihre Sollposition zu bringen, kann diese mit einer zusätzlichen Kraft nach unten beaufschlagt werden, beispielsweise durch eine Positioniervorrichtung für die zweite Halbschale oder eine Form-Schließvornchtung. Die Bewegung der zweiten Halbschale nach unten kann bevorzugt bis in eine durch mindestens einen weiteren Anschlag vorgebbare Endposition erfolgen. Dadurch kann insbesondere bei Klebstoff mit relativ hoher Viskosität, wenn die Gewichtskraft der zweiten Halbschale für ein Einsinken in den Klebstoff bis in die Sollposition der zweiten Halbschale unter Umständen nicht ausreicht, gewährleistet werden, dass die zweite Halbschale in ihre Sollposition gelangt und in dieser mit der ersten Halbschale verbunden wird. Das Verbinden der beiden Halbschalen kann insbesondere durch Verkleben entlang der Vorder- und Hinterkanten der beiden Halbschalen erfolgen.

Bei der Erfindung erfolgt das Bewegen der Steghaltevorrichtung mit dem daran befestigten, mindestens einen Steg in Richtung zu der ersten Halbschale hin bis zu einer Endposition. Die Endposition wird dabei von einer Bewegungsbegrenzungseinrichtung, die die Bewegung begrenzt, so vorgegeben, dass in der Endposition der mindestens eine Steg entlang seiner gesamten Länge in einem Abstand von der ersten Halbschale angeordnet ist. Dadurch wird ein Aufsetzen des Stegs auf die erste Halbschale vermieden, insbesondere im Bereich von Wellen oder Falten der Innenkontur der ersten Halbschale. Auch in diesen Bereichen wird daher eine definierte Klebstofffuge mit einer gewissen Mindesthöhe erzielt. Die Endposition kann beispielsweise bezüglich einer Mittel- oder Symmetrieachse des Rotorblatts festgelegt werden, so dass der mindestens eine Steg "schwebend" in einem Abstand von der ersten Halbschale und bezüglich sowohl der ersten als auch der zweiten Halbschale in seiner Sollposition gehalten wird.

Die Bewegungsbegrenzungseinrichtung kann beispielsweise ein mechanischer Anschlag sein, es ist aber auch eine Begrenzung der Bewegung mit Hilfe einer Steuerung möglich, die die Bewegung bei Erreichen einer vorgebbaren Endposition anhält, beispielsweise durch Ansteuerung einer die Bewegung ausführenden Verstelleinrichtung. In diesem Fall kann die Bewegungsbegrenzungseinrichtung der Verstelleinrichtung einen Sollwert vorgeben, der die Endposition definiert. Bevorzugt ist die mindestens eine Bewegungsbegrenzungseinrichtung einstellbar. Beispielsweise kann ein als Bewegungsbegrenzungseinrichtung dienender Anschlag und/oder ein mit dem Anschlag zusammenwirkendes Gegenstück, etwa eine definierte Kontaktfläche, verstellbar sein, so dass die Endposition des Stegs gemäß seiner Sollposition justiert werden kann.

Nach dem Aushärten des Klebstoffs im Verbindungsbereich zwischen der ersten Halbschale und dem mindestens einen Steg befindet sich der Steg somit exakt in dieser Position, so dass auch zwischen dem mindestens einen Steg und der zweiten Halbschale der gewünschte Abstand genau eingehalten wird.

Das Lösen und Entfernen der Steghaltevorrichtung erfolgt bevorzugt nach dem vollständigen Aushärten des Klebstoffs.

In einer Ausgestaltung ist die mindestens eine Bewegungsbegrenzungseinrichtung als Anschlag an der Steghaltevorrichtung ausgebildet und wirkt mit dem Schalenrand der ersten Halbschale und/oder mit einer die erste Halbschale in ihrer vorgegebenen Position haltenden Aufnahmeeinrichtung für die erste Halbschale zusammen. Grundsätzlich kann der Anschlag in beliebiger Weise ausgeführt sein, solange er die Bewegung der Stegs begrenzt. Beispielsweise kann mindestens ein Anschlag an dem mindestens einen Steg oder an der ersten Halbschale ausgebildet sein, der die Relativbewegung zwischen Steg und Halbschale in der Endposition begrenzt, in dem er in Anlage mit dem jeweils anderen Bauteil gelangt. Bevorzugt ist der mindestens eine Anschlag jedoch so ausgebildet, dass er unabhängig von den Fertigungstoleranzen der Innenkontur der ersten Halbschale wirksam wird. Hierzu kann beispielsweise mindestens ein unabhängig vom Vorhandensein der ersten Halbschale und/oder dem Vorhandensein des mindestens einen Stegs wirksam werdender Anschlag verwendet werden, der die Bewegung eines ersten Bestandteils der Vorrichtung gegenüber einem zweiten Bestandteil der Vorrichtung begrenzt. Dies ist beispielsweise der Fall, wenn der mindestens eine Anschlag an der Steghaltevorrichtung angeordnet ist und mit einer Aufnahmeeinrichtung für die erste Halbschale zusammenwirkt. Hierzu kann die Aufnahmeeinrichtung definierte Kontaktbereiche aufweisen, die in Anlage mit den Anschlägen der Steghaltevorrichtung gelangen. Alternativ kann auch ein Kontakt zwischen an der Steghaltevorrichtung angeordneten Anschlägen und der ersten Halbschale selbst vorgesehen sein. Hierzu wird bevorzugt ein Bereich der ersten Halbschale als Kontaktfläche für die Anschläge gewählt, der relativ geringe Fertigungstoleranzen aufweist, insbesondere geeignete Schalenrandabschnitte der ersten Halbschale. Möglich ist auch ein Zusammenwirken eines bezüglich der Steghaltevorrichtung fest angeordneten Anschlags mit einem beliebigen, feststehenden Gegenstück.

In einer Ausgestaltung wird die Steghaltevorrichtung mit dem daran befestigten mindestens einen Steg vor dem Bewegen in die Endposition in einer vorgegebenen Position in einem Abstand von der ersten Halbschale angeordnet und die Bewegung der Steghaltevorrichtung wird so geführt, dass die Bewegungsrichtung und die relative Winkellage des mindestens einen Stegs bezüglich der ersten Halbschale vorgegeben ist. Die vorgegebene Position kann dabei neben oder oberhalb der ersten Halbschale liegen. Möglich sind aber auch andere vorgebene Positionen. Der mindestens eine Steg befindet sich in dieser Ausgestaltung während der Bewegung in einer wohl definierten Position und Winkelstellung. Ein Verkippen oder ein Verrutschen des mindestens einen Stegs gegenüber der ersten Halbschale während des Bewegens und in der Endposition wird dadurch ausgeschlossen. Es wird dadurch eine wesentlich genauere Positionierung des mindestens einen Stegs gegenüber der Halbschale ermöglicht, und die Endposition wird besonders zuverlässig erreicht.

Das Führen der Bewegung in einer vorgegebenen Richtung kann insbesondere so ausgestaltet sein, dass eine Zurückbewegung in die entgegengesetzte Richtung nicht möglich ist. Anderenfalls kann ein Entfernen des Steges von der ersten Halbschale leicht zu einer Beeinträchtigung der Klebeverbindung führen. Dieses Problem tritt bei dem aus dem Stand der Technik bekannten Verfahren häufig auf, wenn ein Positionierungsfehler des Stegs erkannt wird und der Versuch unternommen wird, die Position noch zu korrigieren. Wird bei der Erfindung eine Rückbewegung des Steges ausgeschlossen, kann dieses Problem selbst dann nicht mehr auftreten, wenn eine Rückbewegung des Steges nicht beabsichtigt war.

In einer Ausgestaltung werden für die Montage eines Rotorblatts, das mehrere in Längsrichtung verlaufende Stege aufweist, alle oder einzelne Stege an der Steghaltevorrichtung befestigt, wobei durch die Befestigung die Lage jedes Stegs bezüglich der Steghaltevorrichtung und bezüglich der Halbschalen fest vorgegeben wird. Beispielsweise kann das Rotorblatt zwei, drei oder mehr Stege aufweisen. Die Stege können zusätzlich miteinander verbunden sein. Durch die definierte Befestigung aller Stege an der Steghaltevorrichtung werden die bereits erläuterten Vorteile auch bei Verwendung mehrerer Stege gleichzeitig für jeden einzelnen Steg erreicht.

In einer Ausgestaltung erfolgt das Befestigen des mindestens einen Stegs an der Steghaltevorrichtung mit einer Vielzahl von Lastaufnahmemitteln an der Steghaltevorrichtung, die mit Lastaufnahmepunkten an dem mindestens einen Steg derart zusammenwirken, dass eine vorgegebene Positionierung des mindestens einen Stegs gegenüber der Steghaltevorrichtung erreicht wird. Die Lastaufnahmemittel können beispielsweise Schrauben oder Bolzen sein, die mit Bohrungen oder sonstigen Öffnungen als Lastaufnahmepunkten an der Steghaltevorrichtung zusammenwirken. Durch das gezielte Zusammenwirken von Lastaufnahmemitteln und Lastaufnahmepunkten wird erreicht, dass sich der mindestens eine Steg nach Befestigung an der Steghaltevorrichtung automatisch in seiner gewünschten Position bezüglich der Steghaltevorrichtung befindet.

Gemäß einer Ausgestaltung weisen die Lastaufnahmemittel jeweils einen Konus auf, der mit einer konischen Öffnung an einem der Lastaufnahmepünkte zusammenwirkt, oder umgekehrt. Durch das Zusammenwirken der konischen Flächen wird eine automatische Zentrierung erreicht, die zu einer besonders genauen Positionierung des mindestens einen Stegs bezüglich der Steghaltevornchtung führt. Die Lastaufnahmemittel können auch über anderweitig zweckmäßig geformte Aufnahmen verfügen, welche mit entsprechend gestalteten Öffnungen an den Lastaufnahmepunkten zusammenwirken.

In einer Ausgestaltung erfolgt das Bewegen der Steghaltevorrichtung mit dem daran befestigten, mindestens einen Steg in Richtung zu der ersten Halbschale hin mit Hilfe von Absenkvorrichtungen, die die Steghaltevorrichtung relativ zu der ersten Halbschale absenken. Die Absenkvorrichtungen können beispielsweise Hydraulikzylinder, pneumatisch betriebene Zylinder oder elektrisch/mechanisch angetriebene Verstelleinrichtungen sein. Bei der Verwendung von Hydraulik- oder Pneumatikzylindern kann insbesondere vorgesehen sein, dass das Absenken durch Öffnen eines Ventils erfolgt, wodurch das Entweichen des Druckmittels aus dem Zylinder ermöglicht wird. In diesem Fall wird ein versehentliches Zurückbewegen der Steghaltevorrichtung mit dem daran befestigten Steg automatisch verhindert, weil hierzu eine Druckmittelzufuhr in den jeweiligen Zylinder erforderlich wäre.

In einer Ausgestaltung ist die mindestens eine Bewegungsbegrenzungseinrichtung derart an den Absenkvorrichtungen ausgebildet, dass sie einen Verstellweg der Absenkvorrichtungen begrenzt. Auch diese Bewegungsbegrenzungseinrichtung ist bevorzugt verstellbar, so dass die Endposition durch entsprechendes Begrenzen des maximalen Absenkweges der Absenkvorrichtungen präzise vorgegeben werden kann.

Gemäß einer Ausgestaltung bilden die Absenkvorrichtungen Auflager, auf denen die Steghaltevorrichtung abgesetzt wird, bevor die Steghaltevorrichtung mit Hilfe der Absenkvorrichtungen abgesenkt wird. Insbesondere kann die Steghaltevorrichtung definierte Widerlager aufweisen, die mit den Auflagern zusammenwirken. Vor dem Absenken der Absenkvorrichtungen befindet sich der an der Steghaltevorrichtung befestigte mindestens eine Steg nach dem Absetzen der Steghaltevorrichtung auf den Auflagern in der vorgegebenen Position in einem Abstand von der ersten Halbschale. Die Bewegung wird durch Absenken der Absenkvorrichtungen ausgeführt, wobei die Absenkvorrichtungen zugleich eine Führung für die Bewegung bilden können, beispielsweise durch die von der Anordnung eines Kolbens eines Hydraulik- oder Pneumatikzylinders vorgegebene Bewegungsrichtung.

Alternativ können sich die Auflager auch an einer stationären Vorrichtung befinden. Die Höhe der Auflagerpunkte entspricht dann der vorgegebenen Absenkposition der Stege. Die Steghaltevorrichtung wird mittels eines Krans oder eines anderen geeigneten Arbeitsmittels abgesenkt.

Alternativ kann die Steghaltevorrichtung auch mittels einer Schwenkbewegung um eine in Längsrichtung der Steghaltevorrichung verlaufende Achse auf die Auflager aufgesetzt werden. Ebenfalls denkbar ist eine Kombination aus Schwenk- und Translationsbewegung.

Die obige Aufgabe wird ebenfalls gelöst durch die Vorrichtung mit den Merkmalen des Anspruchs 9. Vorteilhafte Ausgestaltungen sind in den sich anschließenden Unteransprüchen angegeben.

Die erfindungsgemäße Vorrichtung zur Montage eines Rotorblatts für eine Windenergieanlage, das eine erste Halbschale, eine zweite Halbschale und mindestens einen in Längsrichtung des Rotorblatts verlaufenden Steg aufweist, hat
- eine Aufnahmeeinrichtung für die erste Halbschale zur Aufnahme der ersten Halbschale in einer vorgegebenen Position,
- eine Steghaltevorrichtung, die eine Befestigungseinrichtung aufweist, mit der der mindestens eine Steg lösbar an der Steghaltevorrichtung befestigbar ist, und
- eine Bewegungseinrichtung zum Bewegen der Steghaltevorrichtung mit dem daran befestigten, mindestens einen Steg von einer vorgegebenen Position in Richtung zu der Aufnahmeeinrichtung für die erste Halbschale hin bis zu einer Endposition, wobei die Vorrichtung mindestens eine Bewegungsbegrenzungseinrichtung aufweist, mit der die Bewegung zu der Endposition hin begrenzbar und die Endposition vorgebbar ist.

Mit der Vorrichtung kann das erfindungsgemäße Verfahren ausgeführt werden. Hinsichtlich der Merkmale und der besonderen Vorteile der Vorrichtung wird auf die Erläuterung des korrespondierenden Verfahrens verwiesen.

Gemäß einer Ausgestaltung weist die Bewegungseinrichtung eine Führung zur Vorgabe der Bewegungsrichtung und relativen Winkellage der Steghaltevorrichtung bezüglich der Aufnahmeeinrichtung für die erste Halbschale auf. Die mindestens eine Bewegungsbegrenzungseinrichtung ist bevorzugt an der Führung ausgebildet. Die Bewegungsbegrenzungseinrichtung kann beispielsweise Bestandteil einer Absenkvorrichtung sein, etwa in Form einer Wegbegrenzung eines Kolbens, oder eine gesonderte mechanische Vorrichtung, die die Bewegung der Steghaltevorrichtung begrenzt. Die Bewegungsbegrenzungseinrichtung wird bevorzugt unabhängig von in der Vorrichtung befindlichen Komponenten des Rotorblatts wirksam. Bevorzugt ist sie verstellbar ausgeführt, so dass die Endposition an die jeweiligen Gegebenheiten angepasst werden kann.

Die Erfindung wird nachfolgend anhand von in drei Figuren dargestellten Ausführungsbeispielen näher erläutert. Es zeigen:
- Figur 1a-f: das erfindungsgemäße Verfahren mit Hilfe einer erfindungsgemäßen Vorrichtung, wobei die Abbildungsteile a) bis f) die aufeinanderfolgenden Verfahrensschritte illustrieren,
- Figur 2a-b: die erfindungsgemäße Vorrichtung in einer Seitenansicht,
- Figur 3a-c: einen Querschnitt durch ein Rotorblatt mit eingeklebten Stegen.

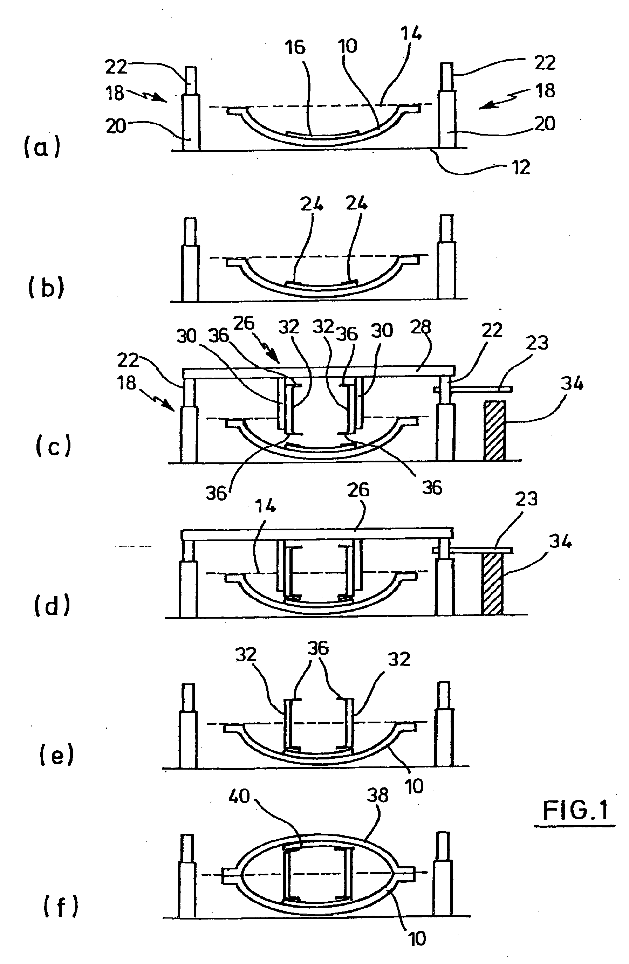

Fig. 1a) zeigt eine erste Halbschale 10 eines Rotorblatts, die in einer nicht dargestellten Aufnahmeeinrichtung oder in der für die Fertigung der Halbschale genutzten offenen Form angeordnet ist. Sie befindet sich in einer vorgegebenen Position oberhalb des Bodens 12 einer Montagehalle, wobei die Innenseite der ersten Halbschale 10 nach oben weist. Gestrichelt eingezeichnet ist eine Trennebene 14 des Rotorblatts, die von der Rotorblattvorderkante zur Rotorblatthinterkante verläuft. Die erste Halbschale 10 weist an der Innenseite einen Hauptgurt 16 auf, der die erste Halbschale verstärkt. Zu beiden Seiten der ersten Halbschale 10 ist jeweils eine Absenkvorrichtung 18 bestehend aus einem Hydraulikzylinder 20 und einem Kolben 22 angeordnet. Die Absenkvorrichtungen 18 sind auf dem Boden 12 der Montagehalle befestigt.

Zusätzlich zu den bereits erläuterten Elementen ist in der Fig. 1b) Klebstoff im Verbindungsbereich zwischen der ersten Halbschale und zwei Stegen angeordnet, der auf die Innenseite der ersten Halbschale 10 bzw. des Hauptgurts 16 aufgetragen ist.

Fig. 1c) zeigt zusätzlich die Steghaltevorrichtung 26, die einen Querträger 28 und davon nach unten vorstehende weitere Träger 30 aufweist. Zwischen den beiden weiteren Trägern 30 befinden sich zwei Stege 32 des Rotorblatts. Die Stege 32 weisen entlang ihrer den beiden Halbschalen zugewandten Längskanten abgewinkelte Befestigungsabschnitte 36 auf, die einen großflächigen Kontakt im Verbindungsbereich mit den beiden Halbschalen ermöglichen.

Der Querträger 28 weist im Bereich seiner beiden Enden jeweils ein nicht dargestelltes Widerlager auf, das auf korrespondierenden Auflagern an den Kolben 22 der beiden Absenkvorrichtungen 18 aufliegt. Der Querträger 28 erstreckt sich bevorzugt waagerecht in einem rechten Winkel zur Längsrichtung der ersten Halbschale 10 bzw. der beiden Stege 32.

In der Figur 1c) befindet sich die Steghaltevorrichtung 26 mit den daran befestigten Stegen 32 in einer vorgegebenen Position, wobei zwischen den Stegen 32 und der ersten Halbschale 10 ein relativ großer Abstand verbleibt. Ausgehend von dieser Position erfolgt das Absenken der Steghaltevorrichtung 26 durch Öffnen eines Ventils der Hydraulikzylinder 18. Die Steghaltevorrichtung 26 mit den daran befestigten Stegen 32 bewegt sich auf die erste Halbschale 10 zu, und zwar wegen der von den Absenkvorrichtungen 18 gebildeten Führung unter Einhaltung einer fest vorgegebenen Bewegungsrichtung, im gezeigten Beispiel senkrecht nach unten, und unter Einhaltung einer definierten Winkellage.

Die Bewegung erfolgt bis eine durch mindestens einen Anschlag 23, der eine Bewegungsbegrenzungseinrichtung ist, vorgegebene Endposition erreicht ist, die in der Fig. 1d) dargestellt ist. Der Anschlag 23 ist bezüglich der Steghaltevorrichtung 26 fest angeordnet und wirkt mit einem fest auf dem Boden 12 stehenden Gegenstück 34 zusammen. In der Endposition befinden sich die Stege 32 in einer bezüglich der Trennebene 14 definierten Position und in einem Abstand von der ersten Halbschale 10. Sie befinden sich im Kontakt mit dem Klebstoff 24 und sind schwebend oberhalb der Innenkontur der ersten Halbschale 10 angeordnet. Der definierte Abstand und die genau eingehaltene Sollgeometrie stellt eine hochfeste und Klebstoff sparende Verklebung zwischen den Stegen 32 und der ersten Halbschale 10 bzw. dem Hauptgurt 16 sicher.

Nach dem Aushärten des Klebstoffs wird die Steghaltevorrichtung 26 von den Stegen 32 gelöst und entfernt. Dieser Zustand ist in der Fig. 1e) illustriert. Die beiden Stege 32 befinden sich nach Abschluss der geführten Bewegung der Steghaltevorrichtung 26 nach wie vor in der exakt vorgegebenen Endposition.

In weiteren Verfahrensschritten wird Klebstoff auf die oberen abgewinkelten Befestigungsabschnitte 36 der Stege 32 aufgetragen, und die zweite Halbschale 38 wird mit Hilfe einer geeigneten Vorrichtung aufgesetzt. Nach dem Aushärten des Klebstoffs ist sie fest mit den beiden Stegen 32 verbunden. Bevorzugt im gleichen Arbeitsgang erfolgt eine Verbindung zwischen der ersten Halbschale 10 und der zweiten Halbschale 38, insbesondere ebenfalls durch Verkleben im Bereich der Kontaktflächen. Die zweite Halbschale 38 weist ebenfalls einen Hauptgurt 40 auf, der sich in Längsrichtung entlang der Innenseite der ersten Halbschale 10 erstreckt.

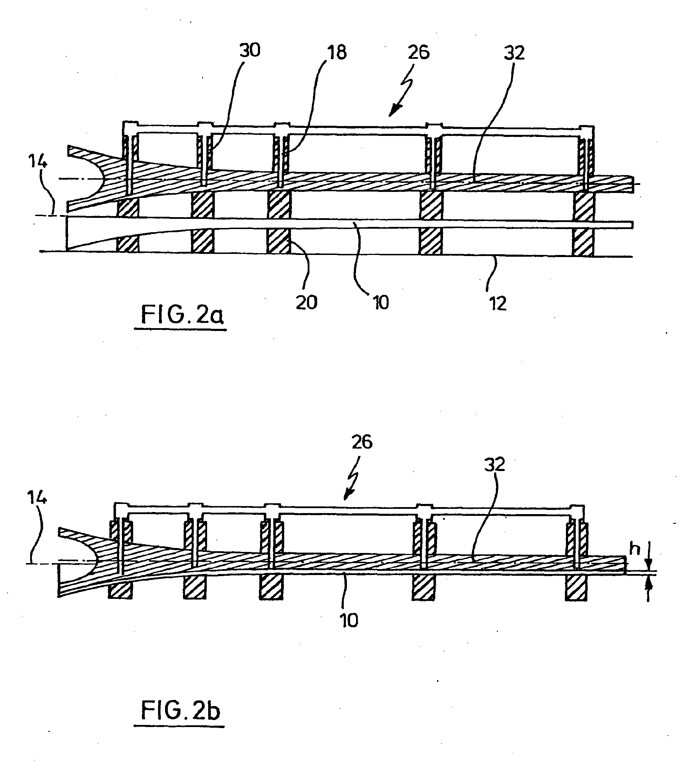

Die Figuren 2a) und 2b) zeigen eine Schnittdarstellung der Seitenansicht der erfindungsgemäßen Steghaltevorrichtung entsprechend den Darstellungen in den Figuren 1c) und 1d). In Fig. 2a) befindet sich die Steghaltevorrichtung 26 mit den daran befestigten Stegen 32 in einer vorgegebenen Position, wobei zwischen den Stegen 32 und der ersten Halbschale 10 ein relativ großer Abstand verbleibt. Ausgehend von dieser Position erfolgt das Absenken der Steghaltevorrichtung 26 durch Öffnen eines Ventils der Hydraulikzylinder 20. Die Steghaltevorrichtung 26 mit den daran befestigten Stegen 32 bewegt sich auf die erste Halbschale 10 zu, und zwar wegen der von den Absenkvorrichtungen 18 gebildeten Führung unter Einhaltung einer fest vorgegebenen Bewegungsrichtung, im gezeigten Beispiel senkrecht nach unten, und unter Einhaltung einer definierten Winkellage.

Die Bewegung erfolgt, bis eine durch mindestens einen Anschlag vorgegebene Endposition erreicht ist, die in der Fig. 2b) dargestellt ist. In dieser Position befinden sich die Stege 32 in einer bezüglich der Trennebene 14 definierten Position. Deutlich erkennbar ist hier, dass der Steg nicht auf der ersten Halbschale abgesetzt, sondern in einem Abstand h von der ersten Halbschale 10 positioniert wird.

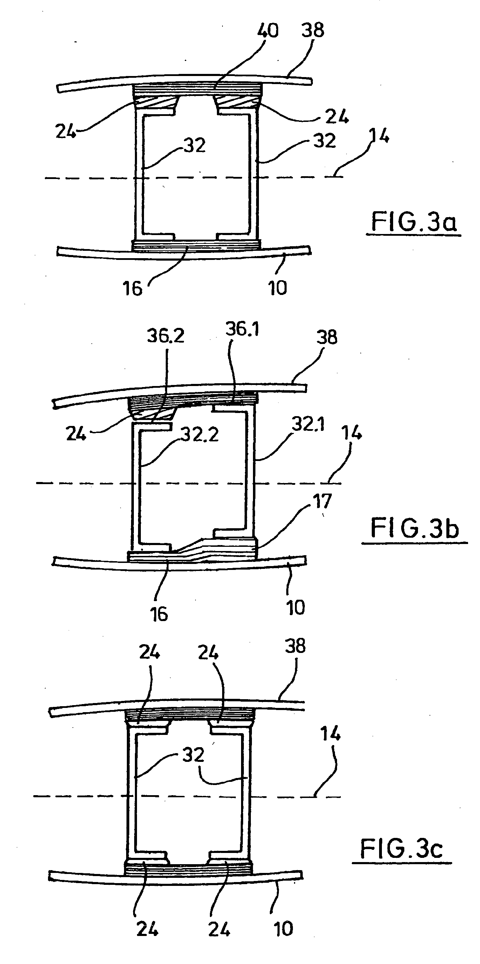

Die Figuren 3a) und 3b) zeigen einen Querschnitt durch ein Rotorblatt mit fehlerhaft eingesetzten Stegen 32, wobei für die Montage der Stege 32 nicht das erfindungsgemäße Verfahren eingesetzt wurde. In Fig. 3a) sind die Stege 32 aufgrund einer geringen Viskosität des Klebstoffs unter ihrem Eigengewicht in den aufgetragenen Klebstoff eingesunken, bis sie auf dem Hauptgurt 16 der ersten Halbschale 10 aufliegen. In diesen Kontaktbereichen wird der Klebstoff fast vollständig verdrängt, und es entsteht keine ausreichende stoffschlüssige Verbindung zwischen Steg 32 und Hauptgurt 16. Die zwischen den Stegen 32 und dem Hauptgurt 40 der zweiten Halbschale 38 entstehende Höhendifferenz wird durch einen überdimensionierten Klebstoffauftrag 24 zwischen den Stegen 32 und der zweiten Halbschale 38 ausgeglichen.

Die Fig. 3b) zeigt einen Schnitt durch ein Rotorblatt, bei dem der Hauptgurt 16 der ersten Blatthalbschale 10 eine einseitige Welle 17 aufweist. Durch diese Welle 17 verkippt der punktuell aufliegende Steg 32.1 in Längsrichtung und erhält eine in Bezug auf die Trennebene 14 höhere Position. Der zweite Steg 32.2 wurde in einem Gurtbereich mit normalem Querschnitt aufgesetzt, ist aber bis auf den Hauptgurt 16 eingesunken. Die Befestigungsabschnitte 36.1, 36.2 der Stege 32.1, 32.2 weisen dadurch einen unterschiedlichen Abstand zur Trennebene 14 auf. Die zweite Halbschale 38 wird beim Aufsetzen auf die erste Halbschale 10 mittels einer nicht dargestellten Form-Schließvorrichtung nach unten gezogen, wodurch der auf den Befestigungsabschnitt 36.1 des ersten Steges aufgetragene Klebstoff verdrängt wird. Im Bereich des Befestigungsabschnitts 36.2 des zweiten Steges 32.2 ist der vertikale Abstand zwischen Befestigungsabschnitt und Hauptgurt so groß, dass er vom vorhandenen Klebstoff 24 nicht überbrückt werden kann. In diesem Beispiel ist an einer Verbindungsstelle zur ersten und an beiden Verbindungsstellen zur zweiten Halbschale 38 keine stoffschlüssige Verbindung zwischen Stegen und Hauptgurten 16 vorhanden.

Die Fig. 3c) zeigt einen Querschnitt durch ein Rotorblatt mit nach dem erfindungsgemäßen Verfahren / der erfindungsgemäßen Vorrichtung eingesetzten Stegen 32. Die Stege 32 befinden sich in einer genau definierten Position zur Trennebene 14 und damit in einem Abstand zur ersten und zweiten Halbschale 10, 38. Dadurch wird die gleichmäßige und vorgabegerechte Dimensionierung der Klebeverbindungen 24 ermöglicht und an allen Verbindungsstellen ein Stoffschluß sichergestellt.

## Patentansprüche

1. Verfahren zur Montage eines Rotorblatts für eine Windenergieanlage, das eine erste Halbschale (10), eine zweite Halbschale (38) und mindestens einen in Längsrichtung des Rotorblatts verlaufenden Steg (32) aufweist, mit den folgenden Schritten:
• Anordnen der ersten Halbschale (10) in einer vorgegebenen Position,
• Befestigen des mindestens einen Stegs (32) an einer Steghaltevorrichtung (26),
• Anordnen von Klebstoff (24) im Verbindungsbereich zwischen der ersten Halbschale (10) und dem mindestens einen Steg (32),
• Bewegen der Steghaltevorrichtung (26) mit dem daran befestigten, mindestens einen Steg (32) in Richtung zu der ersten Halbschale (10) hin bis zu einer Endposition, in der der Klebstoff (24) aushärtet und den mindestens einen Steg (32) und die erste Halbschale (10) miteinander verbindet, wobei mindestens eine die Bewegung zu der ersten Halbschale (10) hin begrenzende Bewegungsbegrenzungseinrichtung die Endposition so vorgibt, dass der mindestens eine Steg (32) entlang seiner gesamten Länge in einem Abstand von der ersten Halbschale (10) schwebend angeordnet ist,
• Lösen und Entfernen der Steghaltevorrichtung (26) von dem mindestens einen Steg (32),
• Anordnen von Klebstoff im Verbindungsbereich zwischen der zweiten Halbschale (38) und dem mindestens einen Steg (32),
• Anordnen der zweiten Halbschale (38) in einer vorgegebenen Position und Verbinden der ersten Halbschale (10) mit der zweiten Halbschale (38).

2. Verfahren nach Anspruch 1, **dadurch gekennzeichnet, dass** die mindestens eine Bewegungsbegrenzungseinrichtung als Anschlag an der Steghaltevorrichtung (26) ausgebildet ist und mit dem Schalenrand der ersten Halbschale (10) und/oder mit einer die erste Halbschale (10) in ihrer vorgegebenen Position haltenden Aufnahmeeinrichtung für die erste Halbschale (10) zusammenwirkt.

3. Verfahren nach Anspruch 1 oder 2, **dadurch gekennzeichnet, dass** die Steghaltevorrichtung mit dem daran befestigten, mindestens einen Steg (32) vor dem Bewegen in die Endposition in einer vorgegebenen Position in einem Abstand von der ersten Halbschale angeordnet ist und die Bewegung der Steghaltevorrichtung so geführt wird, dass die Bewegungsrichtung und die relative Winkellage des mindestens einen Stegs (32) bezüglich der ersten Halbschale (10) vorgegeben ist.

4. Verfahren nach einem der Ansprüche 1 bis 3, **dadurch gekennzeichnet, dass** für die Montage eines Rotorblatts, das mehrere in Längsrichtung verlaufende Stege (32) aufweist, alle Stege (32) an der Steghaltevorrichtung (26) befestigt werden, wobei durch die Befestigung die Lage jedes Stegs (32) bezüglich der Steghaltevorrichtung (26) und bezüglich der anderen Stege (32) fest vorgegeben wird.

5. Verfahren nach einem der Ansprüche 1 bis 4, **dadurch gekennzeichnet, dass** das Befestigen des mindestens einen Stegs (32) an der Steghaltevorrichtung (26) mit einer Vielzahl von Lastaufnahmemitteln an der Steghaltevorrichtung (26) erfolgt, die mit Lastaufnahmepunkten an dem mindestens einen Steg (32) derart zusammenwirken, dass eine vorgegebene Positionierung des mindestens einen Stegs (32) gegenüber der Steghaltevorrichtung (26) erreicht wird, wobei die Lastaufnahmemittel vorzugsweise jeweils einen Konus aufweisen, der mit einer konischen Öffnung an einem der Lastaufnahmepunkte zusammenwirkt, oder umgekehrt.

6. Verfahren nach einem der Ansprüche 1 bis 5, **dadurch gekennzeichnet, dass** das Bewegen der Steghaltevorrichtung (26) mit dem daran befestigten, mindestens einen Steg (32) in Richtung zu der ersten Halbschale (10) hin mit Hilfe von Absenkvorrichtungen (18) erfolgt, die die Steghaltevorrichtung (26) relativ zu der ersten Halbschale (10) absenken.

7. Verfahren nach Anspruch 6, **dadurch gekennzeichnet, dass** die mindestens eine Bewegungsbegrenzungseinrichtung derart an den Absenkvorrichtungen (18) ausgebildet ist, dass sie einen Verstellweg der Absenkvorrichtungen (18) begrenzt.

8. Verfahren nach Anspruch 6 oder 7, **dadurch gekennzeichnet, dass** die Absenkvorrichtungen (18) Auflager bilden, auf denen die Steghaltevorrichtung (26) abgesetzt wird, bevor die Steghaltevorrichtung (26) mit Hilfe der Absenkvorrichtungen (18) abgesenkt wird.

9. Vorrichtung zur Montage eines Rotorblatts für eine Windenergieanlage, das eine erste Halbschale (10), eine zweite Halbschale (38) und mindestens einen in Längsrichtung des Rotorblatts verlaufenden Steg (32) aufweist, mit
• einer Aufnahmeeinrichtung für die erste Halbschale (10) zur Aufnahme der ersten Halbschale (10) in einer vorgegebenen Position,
• einer Steghaltevorrichtung (26), die eine Befestigungseinrichtung aufweist, mit der der mindestens eine Steg (32) lösbar an der Steghaltevorrichtung (26) befestigbar ist, und
• einer Bewegungseinrichtung zum Bewegen der Steghaltevorrichtung (26) mit dem daran befestigten, mindestens einen Steg (32) in Richtung zu der Aufnahmeeinrichtung für die erste Halbschale (10) hin bis zu einer Endposition, wobei die Vorrichtung mindestens eine Bewegungsbegrenzungseinrichtung umfasst, mit der die Bewegung in Richtung zu der Endposition hin begrenzbar und die Endposition vorgebbar ist.

10. Vorrichtung nach Anspruch 9, **dadurch gekennzeichnet, dass** die Bewegungsbegrenzungseinrichtung als Anschlag an der Steghaltevorrichtung (26) ausgebildet ist und mit dem Schalenrand der ersten Halbschale (10) und/oder mit der Aufnahmeeinrichtung für die erste Halbschale (10) zusammenwirkt.

11. Vorrichtung nach Anspruch 9 oder 10, **dadurch gekennzeichnet, dass** die Bewegungseinrichtung eine Führung zur Vorgabe der Bewegungsrichtung und der relativen Winkellage der Steghaltevorrichtung (26) bezüglich der Aufnahme für die erste Halbschale (10) aufweist.

12. Vorrichtung nach einem der Ansprüche 9 bis 11, **dadurch gekennzeichnet, dass** die mindestens eine Bewegungsbegrenzungseinrichtung als Anschlag an der Führung ausgebildet ist.

13. Vorrichtung nach einem der Ansprüche 9 bis 12, **dadurch gekennzeichnet, dass** die Steghaltevorrichtung (26) Befestigungseinrichtungen für zwei oder mehr Stege (32) aufweist, mit denen die zwei oder mehr Stege (32) in einer vorgegebenen Position und Winkellage relativ zur Steghaltevorrichtung (26) und zu einander lösbar an der Steghaltevorrichtung (26) befestigbar sind.

14. Vorrichtung nach einem der Ansprüche 9 bis 13, **dadurch gekennzeichnet, dass** die Befestigungseinrichtung eine Vielzahl von Lastaufnahmemitteln aufweist, die so ausgebildet sind, dass sie mit Lastaufnahmepunkten an dem mindestens einen Steg (32) derart zusammenwirken, dass eine vorgegebene Positionierung des mindestens einen Stegs (32) gegenüber der Steghaltevorrichtung (26) erreicht wird, wobei die Lastaufnahmemittel vorzugsweise jeweils einen Konus aufweisen, der so ausgebildet ist, dass er mit einer konischen Öffnung an einem der Lastaufnahmepunkte zusammenwirken kann, oder umgekehrt.

15. Vorrichtung nach einem der Ansprüche 9 bis 14, **dadurch gekennzeichnet, dass** die Bewegungseinrichtung eine Vielzahl von Absenkvorrichtungen (18) aufweist, die so angeordnet sind, dass die Steghaltevorrichtung (26) mit Hilfe der Absenkvorrichtungen (18) relativ zu der Aufnahme für die erste Halbschale (10) absenkbar ist, wobei die Absenkvorrichtungen vorzugsweise jeweils ein Auflager aufweisen, auf das ein korrespondierendes Widerlager an der Steghaltevorrichtung (26) absetzbar ist derart, dass eine vorgegebene Positionierung der Steghaltevorrichtung (26) gegenüber den Absenkvorrichtungen (18) erreicht wird.

## Claims

1. A method for assembling a rotor blade for a wind energy plant, wherein the rotor blade has a first half shell (10), a second half shell (38) and at least one shear web (32) running in the longitudinal direction of the rotor blade, comprising the following steps:
• arranging the first half shell (10) in a specified position,
• fastening the at least one shear web (32) on a shear web setting device (26),
• applying adhesive (24) in the connection area between the first half shell (10) and the at least one shear web (32),
• moving the shear web setting device (26) with the at least one shear web (32) fastened to it in the direction to the first half shell (10) up to an end position, in which the adhesive (24) cures and connects the at least one shear web (32) to the first half shell (10), wherein at least one movement restriction device restricting the movement towards the first half shell (10) specifies the end position such that the at least one shear web (32) is arranged floating along its entire length at a distance from the first half shell (10),
• loosening and removing the shear web setting device (26) from the at least one shear web (32),
• applying adhesive in the connection area between the second half shell (38) and the at least one shear web (32),
• arranging the second half shell (38) in a specified position and connecting the first half shell (10) to the second half shell (38).

2. The method of claim 1, wherein the at least one movement restriction device is designed as a stop on the shear web setting device (26), and works together with the shell edge of the first half shell (10) and/or with a reception device for the first half shell (10) holding the first half shell (10) in its determined position.

3. The method of claim 1 or 2, wherein the shear web setting device, with the at least one shear web (32) fastened to it, is arranged in a defined position at a distance from the first half shell before the movement to the end position and the movement of the shear web setting device is directed such that the movement direction and the relative angular position of the at least one shear web (32) is defined with respect to the first half shell (10).

4. The method of one of claims 1 to 3, wherein for assembling a rotor blade, which has a plurality of shear webs (32) running in the longitudinal direction, all shear webs (32) are fastened on the shear web setting device (26), wherein the position of each shear web (32) with respect to the shear web setting device (26) and with respect to the other shear webs (32) is permanently specified by the fastening.

5. The method of one of claims 1 to 4, wherein the fastening of the at least one shear web (32) on the shear web setting device (26) takes place with a plurality of load-bearing means on the shear web setting device (26), which work together with the load-bearing points on the at least one shear web (32) such that a specified positioning of the at least one shear web (32) with respect to the shear web setting device (26) is attained, wherein the load-bearing means preferably each have a cone which interacts with a conical opening on one of the load-bearing points, or vice versa.

6. The method of one of claims 1 to 5, wherein the movement of the shear web setting device (26) with the at least one shear web (32) fastened to it in the direction to the first half shell (10) takes place by means of lowering devices (18), which lower the shear web setting device (26) relative to the first half shell (10).

7. The method of claim 6, wherein the at least one movement restriction device is provided on the lowering devices (18) such that it restricts an adjustment path of the lowering devices (18).

8. The method of claim 6 or 7, wherein the lowering devices (18) form bearings, onto which the shear web setting device (26) is setted down before the shear web setting device (26) is lowered with the help of the lowering devices (18).

9. An apparatus for assembling a rotor blade for a wind energy plant, wherein the rotor blade has a first half shell (10), a second half shell (38) and at least one shear web (32) running in the longitudinal direction of the rotor blade, comprising
• a reception device for the first half shell (10) for receiving the first half shell (10) in a specified position,
• a shear web setting device (26), which has a fastening device, with which the at least one shear web (32) can be fastened in a releasable manner on the shear web setting device (26) and
• a movement device for the movement of the shear web setting device (26) with the at least one shear web (32) fastened to it in the direction towards the reception device for the first half shell (10) up to an end position, wherein the apparatus comprises at least one movement restriction device, by which the movement towards the end position can be restricted and the end position can be defined.

10. The apparatus of claim 9, wherein the movement restriction device is designed as a stop on the shear web setting device (26), and works together with the shell edge of the first half shell (10) and/or with the reception device for the first half shell (10).

11. The apparatus of claim 9 or 10, wherein the movement device has a guidancee for specifying the movement direction and the relative angular position of the shear web setting device (26) with respect to the col let for the first half shell (10).

12. The apparatus of one of claims 9 to 11, wherein the at least one movement restriction device is designed as a stop on the guidance.

13. The apparatus of one of claims 9 to 12, wherein the shear web setting device (26) has fastening devices for two or more shear webs (32), with which the two or more shear webs (32) can be fastened on the shear web setting device (26) in a specified position and angular position relative to the shear web setting device (26) and in a releasable manner with respect to each other.

14. The apparatus of one of the claims 9 to 13, wherein the fastening device has a plurality of load-bearing means that are designed such that they interact with load-bearing points on the at least one shear web (32) such that a defined positioning of the at least one shear web (32) with respect to the shear web setting device (26) is attained, wherein the load-bearing means preferably each have a cone that is designed so that it can interact with a conical opening on one of the load-bearing points, or vice versa.

15. The apparatus of one of the claims 9 to 14, wherein the movement device has a plurality of lowering devices (18) that are arranged such that the shear web setting device (26) can be lowered with the help of the lowering devices (18) relative to the collet for the first half shell (10), wherein the lowering devices each preferably have a bearing, onto which a corresponding counter bearing on the shear web setting device (26) can be set such that a predetermined positioning of the shear web setting device (26) with respect to the lowering devices (18) is achieved.

## Revendications

1. Procédé de montage d'une pale de rotor pour une éolienne, qui présente une première demie coque (10), une seconde demie coque (38) et au moins une traverse (32) s'étendant dans la direction longitudinale de la pale de rotor, avec les étapes suivantes :
• disposer la première demie coque (10) dans une position prédéfinie,
• fixer l'au moins une traverse (32) à un dispositif de maintien de traverse (26),
• disposer de l'adhésif (24) dans la zone de connexion entre la première demie coque (10) et l'au moins une traverse (32),
• déplacer le dispositif de maintien de traverse (26) avec l'au moins une traverse (32) fixée à lui en direction de la première demie coque (10) jusqu'à une position d'extrémité, dans laquelle l'adhésif (24) durcit et connecte l'au moins une traverse (32) et la première demie coque (10) ensemble, dans lequel au moins un dispositif de limitation de déplacement limitant le déplacement vers la première demie coque (10) prédéfinit la position d'extrémité de sorte que l'au moins une traverse (32) est disposée de manière suspendue le long de sa longueur entière à une distance de la première demie coque (10),
• desserrer et retirer le dispositif de maintien de traverse (26) de l'au moins une traverse (32),
• disposer de l'adhésif dans la zone de connexion entre la seconde demie coque (38) et l'au moins une traverse (32),
• disposer la seconde demie coque (38) dans une position prédéfinie et connecter la première demie coque (10) à la seconde demie coque (38).

2. Procédé selon la revendication 1, **caractérisé en ce que** l'au moins un dispositif de limitation de déplacement est réalisé en tant que butée sur le dispositif de maintien de traverse (26) et coopère avec le bord de coque de la première demie coque (10) et/ou avec un dispositif de réception maintenant la première demie coque (10) dans sa position prédéfinie pour la première demie coque (10).

3. Procédé selon la revendication 1 ou 2, **caractérisé en ce que** le dispositif de maintien de traverse est disposé avec l'au moins une traverse (32) fixée à lui avant le déplacement dans la position d'extrémité dans une position prédéfinie à une distance de la première demie coque et le déplacement du dispositif de maintien de traverse est mené de sorte que le sens de déplacement et la position angulaire relative de l'au moins une traverse (32) sont prédéfinis par rapport à la première demie coque (10).

4. Procédé selon l'une quelconque des revendications 1 à 3, **caractérisé en ce que** pour le montage d'une pale de rotor qui présente plusieurs traverses (32) s'étendant dans la direction longitudinale, toutes les traverses (32) sont fixées au dispositif de maintien de traverse (26), dans lequel la position de chaque traverse (32) par rapport au dispositif de maintien de traverse (26) et par rapport aux autres traverses (32) est prédéfinie de manière fixe par la fixation.

5. Procédé selon l'une quelconque des revendications 1 à 4, **caractérisé en ce que** la fixation de l'au moins une traverse (32) au dispositif de maintien de traverse (26) s'effectue avec une pluralité de moyens de réception de charge sur le dispositif de maintien de traverse (26) qui coopèrent avec des points de réception de charge sur l'au moins une traverse (32) de telle sorte qu'un positionnement prédéfini de l'au moins une traverse (32) par rapport au dispositif de maintien de traverse (26) soit obtenu, dans lequel les moyens de réception de charge présentent de préférence chacun un cône qui coopère avec une ouverture conique sur un des points de réception de charge, ou inversement.

6. Procédé selon l'une quelconque des revendications 1 à 5, **caractérisé en ce que** le déplacement du dispositif de maintien de traverse (26) avec l'au moins une traverse (32) fixée à lui s'effectue en direction de la première demie coque (10) à l'aide de dispositifs d'abaissement (18) qui abaissent le dispositif de maintien de traverse (26) par rapport à la première demie coque (10).

7. Procédé selon la revendication 6, **caractérisé en ce que** l'au moins un dispositif de limitation de déplacement est réalisé sur les dispositifs d'abaissement (18) de telle sorte qu'il limite une course de réglage des dispositifs d'abaissement (18).

8. Procédé selon la revendication 6 ou 7, **caractérisé en ce que** les dispositifs d'abaissement (18) forment des appuis sur lesquels le dispositif de maintien de traverse (26) est abaissé avant que le dispositif de maintien de traverse (26) ne soit abaissé à l'aide des dispositifs d'abaissement (18).

9. Dispositif de montage d'une pale de rotor pour une éolienne, qui présente une première demie coque (10), une seconde demie coque (38) et au moins une traverse (32) s'étendant dans la direction longitudinale de la pale de rotor, avec
• un dispositif de réception pour la première demie coque (10) pour la réception de la première demie coque (10) dans une position prédéfinie,
• un dispositif de maintien de traverse (26) qui présente un dispositif de fixation avec lequel l'au moins une traverse (32) peut être fixée de manière amovible au dispositif de maintien de traverse (26), et
• un dispositif de déplacement pour déplacer le dispositif de maintien de traverse (26) avec l'au moins une traverse (32) fixée à lui en direction du dispositif de réception pour la première demie coque (10) jusqu'à une position d'extrémité, dans lequel le dispositif comprend au moins un dispositif de limitation de déplacement avec lequel le déplacement en direction de la position d'extrémité peut être limité et la position d'extrémité peut être prédéfinie.

10. Dispositif selon la revendication 9, **caractérisé en ce que** le dispositif de limitation de déplacement est réalisé en tant que butée sur le dispositif de maintien de traverse (26) et coopère avec le bord de coque de la première demie coque (10) et/ou avec le dispositif de réception pour la première demie coque (10).

11. Dispositif selon la revendication 9 ou 10, **caractérisé en ce que** le dispositif de déplacement présente un guide pour prédéfinir le sens de déplacement et la position angulaire relative du dispositif de maintien de traverse (26) par rapport à la réception pour la première demie coque (10).

12. Dispositif selon l'une quelconque des revendications 9 à 11, **caractérisé en ce que** l'au moins un dispositif de limitation de déplacement est réalisé en tant que butée sur le guide.

13. Dispositif selon l'une quelconque des revendications 9 à 12, **caractérisé en ce que** le dispositif de maintien de traverse (26) présente des dispositifs de fixation pour deux traverses (32) ou plus avec lesquels les deux traverses (32) ou plus peuvent être fixées au dispositif de maintien de traverse (26) dans une position et position angulaire prédéfinies par rapport au dispositif de maintien de traverse (26) et de manière amovible l'une par rapport à l'autre.

14. Dispositif selon l'une quelconque des revendications 9 à 13, **caractérisé en ce que** le dispositif de fixation présente une pluralité de moyens de réception de charge qui sont réalisés de sorte qu'ils coopèrent avec des points de réception de charge sur l'au moins une traverse (32) de telle sorte qu'un positionnement prédéfini de l'au moins une traverse (32) par rapport au dispositif de maintien de traverse (26) soit obtenu, dans lequel les moyens de réception de charge présentent de préférence chacun un cône qui est réalisé de sorte qu'il peut coopérer avec une ouverture conique sur un des points de réception de charge, ou inversement.

15. Dispositif selon l'une quelconque des revendications 9 à 14, **caractérisé en ce que** le dispositif de déplacement présente une pluralité de dispositifs d'abaissement (18) qui sont disposés de sorte que le dispositif de maintien de traverse (26) peut être abaissé à l'aide des dispositifs d'abaissement (18) par rapport à la réception pour la première demie coque (10), dans lequel les dispositifs d'abaissement présentent de préférence chacun un appui sur lequel un contre-appui correspondant peut être abaissé sur le dispositif de maintien de traverse (26) de telle sorte qu'un positionnement prédéfini du dispositif de maintien de traverse (26) par rapport aux dispositifs d'abaissement (18) soit obtenu.
